# EUROPEAN PATENT SPECIFICATION

(11) **EP 4 167 175 B1**
(45) Date of publication and mention of the grant of the patent: **26.02.2025**
(21) Application number: 20945456.0
(22) Date of filing: 15.07.2020
(51) Int. Cl.: G06Q 10/04, B61L 27/16, B61L 27/40, G06Q 10/02, G06Q 10/0631, G06Q 50/40

(54) **SPECIAL CAR OPERATION SYSTEM AND SPECIAL CAR OPERATION METHOD**
SPEZIALAUTOBETRIEBSSYSTEM UND SPEZIALAUTOBETRIEBSVERFAHREN
SYSTÈME D'EXPLOITATION DE VOITURE SPÉCIALE ET PROCÉDÉ D'EXPLOITATION DE VOITURE SPÉCIALE

(43) Date of publication of application: 19.04.2023
(73) Proprietor: MITSUBISHI ELECTRIC CORPORATION, Chiyoda-ku Tokyo 100-8310 (JP)
(72) Inventor: SAIKAWA, Yoshinori, Tokyo 100-8310 (JP); KOBAYASHI, Sayaka, Tokyo 100-8310 (JP); YOSHIDA, Kazufumi, Tokyo 100-8310 (JP)
(74) Representative: Pfenning, Meinig & Partner mbB
(86) International application number: PCT/JP2020/027503
(87) International publication number: WO 2022/013971

(56) References cited:
- CN-A- 111 259 714
- JP-A- 2006 018 550
- JP-A- 2006 327 239
- JP-A- 2012 162 209
- JP-A- 2015 182 653
- JP-A- 2017 100 485
- JP-A- H09 123 913
- MA-A1- 20 150 366
- HAAHR JØRGEN T ET AL: "A comparison of two exact methods for passenger railway rolling stock (re)scheduling", TRANSPORTATION RESEARCH PART E: LOGISTICS AND TRANSPORTATION REVIEW, PERGAMON, AMSTERDAM, NL, vol. 91, 16 April 2016 (2016-04-16), pages 15 - 32, XP029556550, ISSN: 1366-5545, DOI: 10.1016/J.TRE.2016.03.019
- ANONYMOUS: "Difference between first and second class train seat - Germany Forum - Tripadvisor", 1 January 2017 (2017-01-01), pages 1 - 4, XP093049805, Retrieved from the Internet <URL:https://www.tripadvisor.com/ShowTopic-g187275-i116-k10298114-Difference_between_first_and_second_class_train_seat-Germany.html> [retrieved on 20230525]
- TRAIN SCHEDULE RESEARCH GROUP: "Passage; Train Schedules and Operations Management", TRAIN SCHEDULES AND OPERATIONS MANAGEMENT, 28 May 2012 (2012-05-28), Tokyo, Japan, pages 136 - 138, XP009534371, ISBN: 978-4-425-76152-4

## Description

### TECHNICAL FIELD

The present disclosure relates to a special car operation system and a special car operation method.

### BACKGROUND ART

The needs of passengers on a train are diversified for each passenger. Among the needs of passengers, for example, there is a desire to travel comfortably by getting on a special car with a special specification different from a specification of a general car.

Meanwhile, there is a technique that can increase the number of trains, or increase or decrease the number of train cars by predicting the number of train reservations (see, for example, Patent Literature 1).

### CITATION LIST

### PATENT LITERATURE

Patent Literature 1: JP 2004-295532 A Non-Patent-literature: HAAHR JORGEN T ET AL: "A comparison of two exact methods for passenger railway rolling stock (re)scheduling", TRANSPORTATION RESEARCH PART E: LOGISTICS AND TRANSPORTATION REVIEW, PERGAMON, AMSTERDAM, NL, vol. 91, 16 April 2016 (2016-04-16), pages 15-32, XP029556550, ISSN: 1366-5545, DOI: 10.1016/J.TRE.

### SUMMARY OF INVENTION

### TECHNICAL PROBLEM

In a case where trains are operated in accordance with an operation plan in which the number of cars per train is determined in advance, if the number of special cars is increased to meet the needs of passengers who want to get on special cars, general cars become crowded during hours when the trains are crowded such as commuting hours.

The technique described in Patent Literature 1 (hereinafter referred to as "conventional technique") does not take a special car and a general car into consideration, and thus the conventional technique cannot solve the problem that the general car is crowded while meeting the needs of passengers who want to get on the special car.

This disclosure is intended to solve the above problem, and an object thereof is to provide a special car operation system capable of reducing the congestion of general cars while meeting the needs of passengers who want to get on special cars, in a predetermined train operation plan.

### SOLUTION TO PROBLEM

A special car operation system according to the present disclosure includes a passenger prediction unit to predict the number of passengers on a train scheduled to operate and output passenger count information indicating the number of passengers predicted, a car-count determination unit to determine the number of special cars in the train on the basis of the passenger count information output by the passenger prediction unit and output car count information indicating the number of special cars determined, an arrangement-position determination unit to determine a position where a special car is to be disposed in the train on a basis of the car count information output by the car-count determination unit and output arrangement position information indicating the position determined, and a car-specification change instructing unit to generate car-specification change instructing information for changing a specification of at least one of a seat, a lighting device, and an acoustic device to a predetermined specification on a basis of the arrangement position information output by the arrangement-position determination unit and output the car-specification change instructing information generated, the seat, the lighting device, and the acoustic device being included in accompanying equipment provided in a car disposed at the position indicated by the arrangement position information, in which the passenger prediction unit predicts, on a basis of a plurality of predetermined passenger types, passenger types of respective passengers who get on the train scheduled to operate and predicts the number of passengers of each of the passenger types predicted, thereby outputting the passenger count information indicating the number of passengers of each of the passenger types predicted, and the car-count determination unit determines, as to a plurality of predetermined types of special cars, the number of special cars for each of the types of special cars corresponding to the respective passenger types on a basis of the passenger count information output by the passenger prediction unit, and outputs the car count information indicating the number of special cars determined for each of the types.

### ADVANTAGEOUS EFFECTS OF INVENTION

According to the present disclosure, it is possible to reduce the congestion of general cars while meeting the needs of passengers who want to get on special cars, in a predetermined train operation plan.

### BRIEF DESCRIPTION OF DRAWINGS

FIG. 1 is a block diagram illustrating an example of a configuration of a main part of a special car operation system according to a first embodiment.
FIG. 2 is a flowchart illustrating an example of processing of the special car operation system according to the first embodiment.

### DESCRIPTION OF EMBODIMENTS

Hereinafter, an embodiment of the present disclosure will be described in detail with reference to the drawings.

### First Embodiment

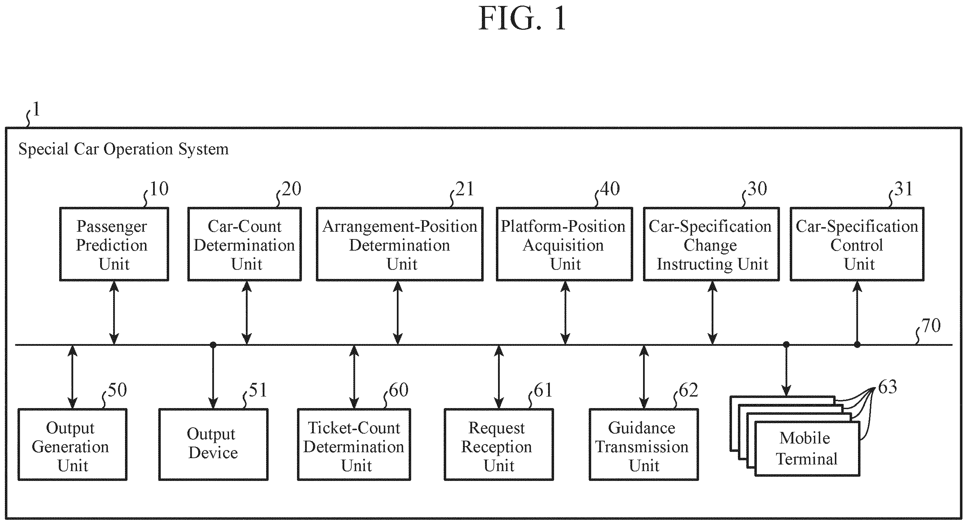

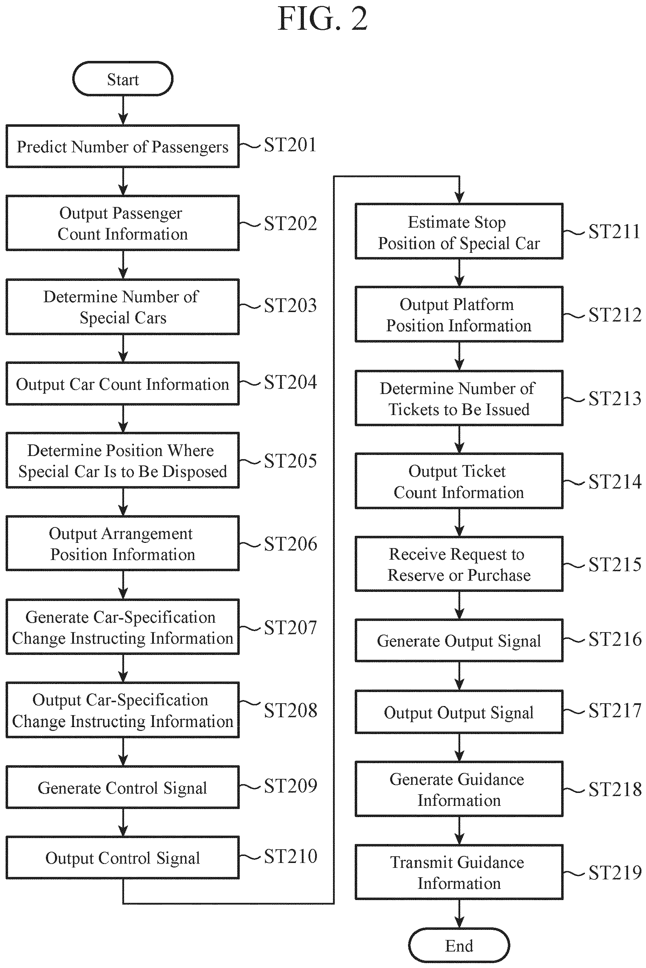

A special car operation system 1 according to a first embodiment will be described with reference to FIGS. 1 and 2.

A configuration of a main part of the special car operation system 1 according to the first embodiment will be described with reference to FIG. 1.

FIG. 1 is a block diagram illustrating an example of the configuration of the main part of the special car operation system 1 according to the first embodiment.

The special car operation system 1 includes a passenger prediction unit 10, a car-count determination unit 20, an arrangement-position determination unit 21, a car-specification change instructing unit 30, a car-specification control unit 31, a platform-position acquisition unit 40, an output generation unit 50, an output device 51, a ticket-count determination unit 60, a request reception unit 61, a guidance transmission unit 62, and a mobile terminal 63.

The passenger prediction unit 10, the car-count determination unit 20, the arrangement-position determination unit 21, the car-specification change instructing unit 30, the car-specification control unit 31, the platform-position acquisition unit 40, the output generation unit 50, the output device 51, the ticket-count determination unit 60, the request reception unit 61, the guidance transmission unit 62, and the mobile terminal 63 included in the special car operation system 1 are connected to each other via a network 70 capable of transmitting and receiving information.

For example, the network 70 is a wireless communication network such as a wireless local area network (LAN), long term evolution (LTE), or Bluetooth (BT (registered trademark)), or a wired communication network such as a wired LAN or a signal line that performs communication using a predetermined protocol.

Note that the arrangement-position determination unit 21, the car-specification change instructing unit 30, the car-specification control unit 31, the platform-position acquisition unit 40, the output generation unit 50, the output device 51, the ticket-count determination unit 60, the request reception unit 61, the guidance transmission unit 62, and the mobile terminal 63 are not essential components for the special car operation system 1.

In the first embodiment, a description will be given on the assumption that the special car operation system 1 includes the arrangement-position determination unit 21, the car-specification change instructing unit 30, the car-specification control unit 31, the platform-position acquisition unit 40, the output generation unit 50, the output device 51, the ticket-count determination unit 60, the request reception unit 61, the guidance transmission unit 62, and the mobile terminal 63.

The passenger prediction unit 10 predicts the number of passengers on a train scheduled to operate. The passenger prediction unit 10 outputs passenger count information indicating the number of passengers predicted by the passenger prediction unit 10.

Specifically, for example, the passenger prediction unit 10 predicts the number of passengers on a train scheduled to operate on the basis of the number of passengers on a train operated during the same time period in the past.

The method by which the passenger prediction unit 10 predicts the number of passengers on the train scheduled to operate is not limited to the method based on the number of passengers on the train operated during the same time period in the past.

The passenger prediction unit 10 includes, for example, a computer having a processor and a memory or a processing circuit. The passenger prediction unit 10 may include a computer having a processor, a memory, and a processing circuit.

The processor uses, for example, a central processing unit (CPU), a graphics processing unit (GPU), a microprocessor, a microcontroller, or a digital signal processor (DSP).

In addition, the memory uses, for example, a semiconductor memory or a magnetic disk. More specifically, the memory uses, for example, a random access memory (RAM), a read only memory (ROM), a flash memory, an erasable programmable read only memory (EPROM), an electrically erasable programmable read only memory (EEPROM), an SSD, or an HDD.

Furthermore, the processing circuit uses, for example, an application specific integrated circuit (ASIC), a programmable logic device (PLD), a field-programmable gate array (FPGA), a system on a chip (SoC), or a system large-scale integration (LSI).

The car-count determination unit 20 includes, for example, a computer having a processor and a memory or a processing circuit. The car-count determination unit 20 may include a computer having a processor, a memory, and a processing circuit.

The car-count determination unit 20 determines the number of special cars in a train on the basis of the passenger count information output by the passenger prediction unit 10. The car-count determination unit 20 outputs car count information indicating the number of special cars determined by the car-count determination unit 20.

Here, the special car refers to as, for example, a car with a specification of a special type (hereinafter referred to as "special specification") different from a specification of a general car (hereinafter referred to as "general specification").

For example, the car-count determination unit 20 determines the number of special cars in a train on the basis of a value (hereinafter, referred to as "number of car passengers") obtained by dividing the number of passengers on the train scheduled to operate indicated by the passenger count information (hereinafter, referred to as "predicted number of train passengers") by the number of cars in the train determined in advance in accordance with an operation plan, that is, the number of general cars.

Specifically, for example, the car-count determination unit 20 assumes first that all cars of the train scheduled to operate are general cars. In a case where the number of car passengers is larger than a predetermined threshold, the car-count determination unit 20 sets the number of special cars to "0". In a case where the number of car passengers is equal to or less than the threshold, the car-count determination unit 20 sets the number of special cars to "1" and the remaining cars as general cars. In a case where the number of car passengers is equal to or less than the threshold, the car-count determination unit 20 sequentially increases the number of special cars as long as the number of car passengers, which is a value obtained by dividing the predicted number of train passengers by the number of general cars, is equal to or less than the threshold.

When determining the number of special cars in a train, the car-count determination unit 20 may take the number of passengers who can get on the special car (hereinafter, referred to as "number of special car passengers") into consideration, determine the number of car passengers calculated by dividing the value obtained by subtracting the number of special car passengers from the predicted number of train passengers by the number of general cars, and determine the number of special cars in the train on the basis of the number of car passengers.

With the configuration, the special car operation system 1 can reduce the congestion of general cars while meeting the needs of passengers who want to get on special cars, in a predetermined train operation plan.

The passenger prediction unit 10 may predict a passenger type of each of a plurality of passengers who get on a train scheduled to operate on the basis of a plurality of predetermined passenger types.

Specifically, for example, the passenger prediction unit 10 predicts the number of passengers on the train scheduled to operate on the basis of the number of passengers of each passenger type on a train operated during the same time period in the past. The method by which the passenger prediction unit 10 predicts the number of passengers of each passenger type on the train scheduled to operate is not limited to the method based on the number of passengers of each passenger type on the train operated during the same time period in the past.

By predicting the number of passengers of each passenger type predicted by the passenger prediction unit 10, the passenger prediction unit 10 outputs passenger count information indicating the predicted number of passengers of each passenger type.

Here, the passenger types include a business traveler such as a commuter or a business trip passenger, a vacationer such as a traveler, a sightseer, or a homecoming passenger, and the like.

In a case where the passenger prediction unit 10 outputs the passenger count information indicating the number of passengers of each passenger type, for example, the car-count determination unit 20 determines, as to a plurality of predetermined types of special cars, the number of special cars for each of the types of special cars corresponding to the respective passenger types on the basis of the passenger count information output by the passenger prediction unit 10. The car-count determination unit 20 outputs car count information indicating the number of special cars determined for each type by the car-count determination unit 20.

In a case where the passenger type is, for example, a business traveler, the special car corresponding to the passenger type is a special car with a specification in which the business traveler is comfortable (hereinafter, referred to as "business specification"). In a case where the passenger type is a vacationer, the special car corresponding to the passenger type is a special car with a specification in which the vacationer is comfortable (hereinafter, referred to as "vacation specification").

With the configuration, the special car operation system 1 can reduce the congestion of general cars while meeting the needs of passengers who want to get on special cars, in a predetermined train operation plan.

As described above, the special car operation system 1 may include the arrangement-position determination unit 21.

The arrangement-position determination unit 21 includes, for example, a computer having a processor and a memory or a processing circuit. The arrangement-position determination unit 21 may include a computer having a processor, a memory, and a processing circuit.

The arrangement-position determination unit 21 determines the position where a special car is to be disposed in a train on the basis of the car count information output by the car-count determination unit 20. The arrangement-position determination unit 21 outputs arrangement position information indicating the position determined by the arrangement-position determination unit 21. Specifically, the position where the special car is to be disposed in the train refers to, for example, the car number of the special car in the train.

In a case where the passenger prediction unit 10 outputs the passenger count information indicating the number of passengers of each passenger type, for example, the arrangement-position determination unit 21 determines the positions where special cars corresponding to respective passenger types are to be disposed on the basis of the car count information output by the car-count determination unit 20, and outputs arrangement position information indicating the positions determined by the arrangement-position determination unit 21.

As described above, the special car operation system 1 may include the car-specification change instructing unit 30.

The car-specification change instructing unit 30 includes, for example, a computer having a processor and a memory or a processing circuit. The car-specification change instructing unit 30 may include a computer having a processor, a memory, and a processing circuit.

On the basis of the arrangement position information output by the arrangement-position determination unit 21, the car-specification change instructing unit 30 generates car-specification change instructing information for changing the specification of a car disposed at the position indicated by the arrangement position information to a predetermined specification. The car-specification change instructing unit 30 outputs the car-specification change instructing information generated by the car-specification change instructing unit 30.

Specifically, for example, the car-specification change instructing unit 30 outputs car-specification change instructing information for changing the specification of the car disposed at the position indicated by the arrangement position information to a special specification and car-specification change instructing information for changing the specification of each of the remaining cars to a general specification.

The car-specification change instructing information output by the car-specification change instructing unit 30 is acquired by, for example, the car-specification control unit 31 provided in each car. Specifically, the car-specification change instructing unit 30 outputs the car-specification change instructing information to the car-specification control unit 31 provided in the car corresponding to the car-specification change instructing information, and the car-specification control unit 31 acquires the car-specification change instructing information output by the car-specification change instructing unit 30.

In a case where the arrangement-position determination unit 21 outputs the arrangement position information indicating the positions where special cars corresponding to respective passenger types are to be disposed, for example, the car-specification change instructing information for changing the specification of a car to the special specification, which is output by the car-specification change instructing unit 30, is information for changing the specification of the car to a business specification or a vacation specification.

The car-specification control unit 31 includes, for example, a computer having a processor and a memory or a processing circuit. The car-specification control unit 31 may include a computer having a processor, a memory, and a processing circuit.

The car-specification control unit 31 acquires car-specification change instructing information from the car-specification change instructing unit 30 via the network 70. On the basis of the car-specification change instructing information acquired by the car-specification control unit 31, the car-specification control unit 31 generates control signals for controlling accompanying equipment such as seats, lighting devices, display devices, and acoustic devices provided in each car.

The control signal generated by the car-specification control unit 31 is a signal for changing the state or operation of the accompanying equipment from the general specification to the special specification, or a signal for changing the state or operation of the accompanying equipment from the special specification to the general specification.

The car-specification control unit 31 outputs the control signal generated by the car-specification control unit 31 to the accompanying equipment.

For example, in a case where the control signal output from the car-specification control unit 31 is a signal for changing the state of seats from the general specification to the special specification, the car-specification control unit 31 causes motors provided in the seats to operate on the basis of the control signal and thereby changes the state of the seats from a state (hereinafter referred to as "long seat") where the passengers are seated side by side in a train traveling direction (hereinafter, simply referred to as a "traveling direction") while facing a direction (hereinafter, referred to as "traveling orthogonal direction") orthogonal to the traveling direction to a state (hereinafter referred to as "cross seat") where the passengers are seated side by side in the traveling orthogonal direction while facing the traveling direction. Similarly, in a case where the control signal output from the car-specification control unit 31 is a signal for changing the state of the seats from the special specification to the general specification, the car-specification control unit 31 causes the motors provided in the seats to operate on the basis of the control signal and thereby changes the seats from the cross seat to the long seat.

Specifically, for example, in a case where the arrangement-position determination unit 21 outputs the arrangement position information indicating the position where a special car corresponding to a passenger type is to be disposed and the control signal output from the car-specification control unit 31 is a signal for changing the state of the seats from the general specification to the business specification, for example, the car-specification control unit 31 causes the motors provided in the seats to operate on the basis of the control signal and thereby changes the seats from the long seat to the cross seat. In addition, in a case where the control signal output from the car-specification control unit 31 is a signal for changing the state of the seats from the general specification to the vacation specification, the car-specification control unit 31 causes the motors provided in the seats to operate on the basis of the control signal and thereby changes the state of the seats from the long seat to a state (hereinafter referred to as "box seat") where a seat on which passengers sit side by side in the traveling orthogonal direction while facing the traveling direction and a seat on which passengers sit side by side in the traveling orthogonal direction while facing the opposite direction to the traveling direction make a pair in such a manner that the passengers on the paired seats face to each other.

In the case of a signal for changing the state of the seats from the general specification to the special specification, the car-specification control unit 31 may change, for example, a part of the seats from the long seat to the cross seat, and the other part of the seats from the long seat to the box seat.

For example, in a case where the control signal output from the car-specification control unit 31 is a signal for changing the state of the seats from the general specification to the special specification, by causing the motors provided in the seats to operate on the basis of the control signal and thereby flipping up the seats, the car-specification control unit 31 may make a space for housing large luggage such as a suitcase, a bicycle, a golf bag, or ski equipment.

In addition, for example, in a case where the control signal output from the car-specification control unit 31 is a signal for changing the state of a lighting device from the general specification to the special specification or from the special specification to the general specification, the car-specification control unit 31 causes the illuminance or the color temperature of the light emitted by the lighting device to change on the basis of the control signal.

Specifically, for example, in a case where the control signal output from the car-specification control unit 31 is a signal for changing the state of the lighting device from the general specification to the business specification, for example, the car-specification control unit 31 changes the color temperature of the light emitted by the lighting device to be high. By the car-specification control unit 31 changing the color temperature of the light to be high, a passenger can easily read characters of documents, books, or the like. In addition, in a case where the control signal output from the car-specification control unit 31 is a signal for changing the state of the lighting device from the general specification to the vacation specification, for example, the car-specification control unit 31 changes the color temperature of the light emitted by the lighting device to be low. By the car-specification control unit 31 changing the color temperature of the light to be low, a passenger can easily relax.

In addition, for example, in a case where the control signal output from the car-specification control unit 31 is a signal for changing the operation of a display device from the general specification to the special specification or from the special specification to the general specification, the car-specification control unit 31 causes the display content displayed on the display device to change on the basis of the control signal. In a case where the car includes a plurality of display devices, the car-specification control unit 31 may cause a predetermined display device among the plurality of display devices to operate on the basis of the control signal.

Specifically, for example, in a case where the control signal output from the car-specification control unit 31 is a signal for changing the display content of the display device from the general specification to the business specification, for example, the car-specification control unit 31 causes the display device installed on the side wall surface in the car to display the latest topical information. With such a configuration, the special car operation system 1 can provide a comfortable environment for passengers. In addition, in a case where the control signal output from the car-specification control unit 31 is a signal for changing the display content of the display device from the general specification to the vacation specification, for example, the car-specification control unit 31 causes the display device installed on the ceiling surface in the car to display a display image simulating a blue sky, a night sky, or the like. With such a configuration, the special car operation system 1 can provide a comfortable environment for passengers.

Furthermore, for example, in a case where the control signal output from the car-specification control unit 31 is a signal for changing the operation of an acoustic device from the general specification to the special specification or from the special specification to the general specification, the car-specification control unit 31 causes the sound content output from the acoustic device to change on the basis of the control signal. The acoustic device is not limited to a device that simply outputs sound, and may operate as a noise canceller. The acoustic device operating as a noise canceller receives a sound signal from a microphone provided near a seat, for example, and generates and outputs a sound signal having the opposite phase to the received sound signal. With such a configuration, it is possible to prevent the passenger sitting on the seat from hearing noise such as speech of a passenger sitting on another seat.

Specifically, for example, in a case where the control signal output from the car-specification control unit 31 is a signal for changing the sound content of the acoustic device from the general specification to the business specification, for example, the car-specification control unit 31 causes the acoustic device to operate as a noise canceller. With such a configuration, the special car operation system 1 can provide a comfortable environment for passengers. Furthermore, in a case where the control signal output from the car-specification control unit 31 is a signal for changing the sound content of the acoustic device from the general specification to the vacation specification, for example, the car-specification control unit 31 causes the acoustic device to output background music with a slow tempo. With such a configuration, the special car operation system 1 can provide a comfortable environment for passengers.

In addition, for example, in a case where the control signal output from the car-specification control unit 31 is a signal for changing the state of an ambient-light suppression device such as a curtain, a blind, or a light-shielding shield from the general specification to the special specification or from the special specification to the general specification, the car-specification control unit 31 causes the state of the ambient-light suppression device to change on the basis of the control signal.

Specifically, for example, in a case where the control signal output from the car-specification control unit 31 is a signal for changing the state of the ambient-light suppression device from the general specification to the business specification, for example, the car-specification control unit 31 changes the state of the ambient-light suppression device in such a way as to block ambient light from the window. By the car-specification control unit 31 changing the state of the ambient-light suppression device in such a way as to block ambient light from the window, a passenger can easily read characters of documents or books.

With the configuration, the special car operation system 1 can easily change the specification of the car.

Note that the car-specification change instructing information output by the car-specification change instructing unit 30 is only required to be information that enables the specification of the car to be changed to a predetermined specification. Thus, the car-specification change instructing information may be information for changing the state or operation of each of pieces of accompanying equipment provided in the car, or may be other than such information.

Specifically, for example, in a case where the car-specification change instructing information is information for changing the state or operation of each of the pieces of accompanying equipment provided in the car, the car-specification control unit 31 generates and outputs, for each piece of the car-specification change instructing information, a control signal corresponding to the car-specification change instructing information. In a case where the car-specification change instructing information is not the information for changing the state or operation of each of the pieces of accompanying equipment provided in the car, specifically, for example, in a case where the car-specification change instructing information is information indicating that the specification of the car is to be changed to the general specification or the special specification, the car-specification control unit 31 generates and outputs predetermined control signals corresponding to the respective pieces of accompanying equipment on the basis of the car-specification change instructing information.

As described above, the special car operation system 1 may include the platform-position acquisition unit 40, the output generation unit 50, and the output device 51 in addition to the arrangement-position determination unit 21.

The platform-position acquisition unit 40 and the output generation unit 50 each include, for example, a computer having a processor and a memory or a processing circuit. The platform-position acquisition unit 40 and the output generation unit 50 each may include a computer having a processor, a memory, and a processing circuit.

The platform-position acquisition unit 40 estimates the stop position of a special car on the platform when the train arrives at a station where the train is scheduled to arrive, on the basis of the arrangement position information output by the arrangement-position determination unit 21. The platform-position acquisition unit 40 outputs platform position information indicating the stop position of the special car estimated by the platform-position acquisition unit 40.

The output generation unit 50 generates an output signal for guiding a passenger who is going to get on the special car to the stop position of the special car on the platform, on the basis of the platform position information output by the platform-position acquisition unit 40. At a predetermined time point before the train arrives at the station where the train is scheduled to arrive, the output generation unit 50 outputs the output signal generated by the output generation unit 50 to the output device 51 and causes the output device 51 to provide output based on the output signal.

The output device 51 is installed in a station such as a platform or a concourse of a station, for example. The output device 51 is, for example, a display device such as a display or a sound output device such as a speaker.

With the configuration, the special car operation system 1 can inform passengers who are going to get on the special car of the stop position of the special car on the platform.

As described above, the special car operation system 1 may include the ticket-count determination unit 60 and the request reception unit 61.

The ticket-count determination unit 60 and the request reception unit 61 each include, for example, a computer having a processor and a memory or a processing circuit. The ticket-count determination unit 60 and the request reception unit 61 each may include a computer having a processor, a memory, and a processing circuit.

The ticket-count determination unit 60 determines the number of tickets to be issued for getting on a special car on the basis of the car count information output by the car-count determination unit 20. The ticket-count determination unit 60 outputs ticket count information indicating the number of tickets to be issued determined by the ticket-count determination unit 60. Note that, for example, the number of passengers who can get on one special car is determined in advance.

The request reception unit 61 receives a request to reserve or purchase a ticket for getting on a special car on the basis of the ticket count information output by the ticket-count determination unit 60. For example, a passenger who wants to reserve or purchase the ticket for getting on the special car operates a ticket machine installed in a station or a terminal such as an information terminal or the mobile terminal 63 available to the passenger. Thereby, the request reception unit 61 receives a request to reserve or purchase the ticket for getting on the special car.

With the configuration, the special car operation system 1 can receive an adequate number of requests to reserve or purchase a ticket for getting on a special car.

Note that the passenger prediction unit 10 may predict again the number of passengers on a train scheduled to operate on the basis of the number of requests to reserve or purchase a ticket for getting on a special car received by the request reception unit 61.

In addition, the car-count determination unit 20 may determine again the number of special cars in the train on the basis of passenger count information newly generated by the prediction made again by the passenger prediction unit 10.

As described above, the special car operation system 1 may include the platform-position acquisition unit 40, the guidance transmission unit 62, and the mobile terminal 63 in addition to the arrangement-position determination unit 21, the ticket-count determination unit 60, and the request reception unit 61.

The platform-position acquisition unit 40 and the guidance transmission unit 62 each include, for example, a computer having a processor and a memory or a processing circuit. The platform-position acquisition unit 40 and the guidance transmission unit 62 each may include a computer having a processor, a memory, and a processing circuit.

The guidance transmission unit 62 generates guidance information for guiding a passenger who has reserved or purchased a ticket for getting on a special car to the stop position of the special car on the platform, on the basis of the platform position information output by the platform-position acquisition unit 40. The guidance transmission unit 62 transmits the guidance information generated by the guidance transmission unit 62 to the mobile terminal 63 carried by the passenger.

In this case, for example, when receiving a request to reserve or purchase the ticket for getting on the special car, the request reception unit 61 acquires information indicating a contact address such as an email address that makes it possible to reach a passenger who is going to get on the special car using the ticket.

The mobile terminal 63 is, for example, a portable terminal such as a mobile phone, a smartphone, or a tablet terminal.

With the configuration, the special car operation system 1 can inform passengers who are going to get on the special car of the stop position of the special car on the platform.

Note that the guidance transmission unit 62 transmits the guidance information at a predetermined time point before the train that the passenger is going to get on arrives, for example.

The timing at which the guidance transmission unit 62 transmits the guidance information is not limited to a predetermined time point before the train that the passenger is going to get on arrives.

For example, the guidance transmission unit 62 may acquire, from the mobile terminal 63, current position information indicating the current position of the mobile terminal 63, that is, the current position of a passenger carrying the mobile terminal 63, and transmit the guidance information when the current position indicated by the current position information is located in a predetermined area.

An operation of the special car operation system 1 according to the first embodiment will be described with reference to FIG. 2.

FIG. 2 is a flowchart illustrating an example of processing of the special car operation system 1 according to the first embodiment. For example, the special car operation system 1 performs the processing of the flowchart for each of a plurality of trains in a predetermined operation plan.

First, in step ST201, the passenger prediction unit 10 predicts the number of passengers.

Next, in step ST202, the passenger prediction unit 10 outputs passenger count information.

Next, in step ST203, the car-count determination unit 20 determines the number of special cars.

Next, in step ST204, the car-count determination unit 20 outputs car count information.

Next, in step ST205, the arrangement-position determination unit 21 determines the position where the special car is to be disposed.

Next, in step ST206, the arrangement-position determination unit 21 outputs arrangement position information.

Next, in step ST207, the car-specification change instructing unit 30 generates car-specification change instructing information.

Next, in step ST208, the car-specification change instructing unit 30 outputs the car-specification change instructing information.

Next, in step ST209, the car-specification control unit 31 generates a control signal.

Next, in step ST210, the car-specification control unit 31 outputs the control signal.

Next, in step ST211, the platform-position acquisition unit 40 estimates the stop position of the special car.

Next, in step ST212, the platform-position acquisition unit 40 outputs platform position information.

Next, in step ST213, the ticket-count determination unit 60 determines the number of tickets to be issued for getting on the special car.

Next, in step ST214, the ticket-count determination unit 60 outputs ticket count information.

Next, in step ST215, the request reception unit 61 receives a request to reserve or purchase a ticket for getting on the special car.

Next, in step ST216, the output generation unit 50 generates an output signal for guiding a passenger to the stop position of the special car.

Next, in step ST217, the output generation unit 50 outputs the output signal to the output device 51.

Next, in step ST218, the guidance transmission unit 62 generates guidance information.

Next, in step ST219, the guidance transmission unit 62 transmits the guidance information.

After step ST219, the special car operation system 1 ends the processing of the flowchart.

Note that, in a case where the special car operation system 1 does not include the arrangement-position determination unit 21, the processes from step ST205 to step ST212 and the processes from step ST216 to step ST219 are omitted.

In addition, in a case where the special car operation system 1 does not include the car-specification change instructing unit 30 and the car-specification control unit 31, the processes from step ST207 to step ST210 are omitted.

Furthermore, in a case where the special car operation system 1 does not include the platform-position acquisition unit 40, the processes of step ST211 and step ST212 and the processes from step ST216 to step ST219 are omitted.

In addition, in a case where the special car operation system 1 does not include the ticket-count determination unit 60 and the request reception unit 61, the processes from step ST213 to step ST215 are omitted.

Moreover, in a case where the special car operation system 1 does not include the output generation unit 50, the processes of step ST216 and step ST217 are omitted.

Further, in a case where the special car operation system 1 does not include the guidance transmission unit 62, the processes of step ST218 and step ST219 are omitted.

Furthermore, as long as the process of step ST214 is performed before the process of step ST215, the process of step ST213 is performed before the process of step ST214, and the process of step ST204 is performed before the process of step ST213, the order of the processes from step ST213 to step ST215 is any order.

Further, as long as the process of step ST216 is performed before the process of step ST217, the process of step ST218 is performed before the process of step ST219, and the process of step ST212 is performed before the processes of step ST216 and step ST218, the order of the processes from step ST216 to step ST219 is any order.

As described above, the special car operation system 1 according to the first embodiment includes: the passenger prediction unit 10 that predicts the number of passengers on a train scheduled to operate and outputs passenger count information indicating the predicted number of passengers; and the car-count determination unit 20 that determines the number of special cars in the train on the basis of the passenger count information output by the passenger prediction unit 10 and outputs car count information indicating the determined number of special cars.

With the configuration, the special car operation system 1 can reduce the congestion of general cars while meeting the needs of passengers who want to get on the special car, in a predetermined train operation plan.

Furthermore, in addition to the configuration described, the special car operation system 1 according to the first embodiment includes: the arrangement-position determination unit 21 that determines the position where the special car is to be disposed in the train on the basis of the car count information output by the car-count determination unit 20 and outputs arrangement position information indicating the position determined; and the car-specification change instructing unit 30 that generates car-specification change instructing information for changing the specification of the car disposed at the position indicated by the arrangement position information to a predetermined specification on the basis of the arrangement position information output by the arrangement-position determination unit 21 and outputs the car-specification change instructing information generated.

With the configuration, the special car operation system 1 can reduce the congestion of general cars while meeting the needs of passengers who want to get on the special car, in a predetermined train operation plan. In addition, the special car operation system 1 can easily change the specification of the car.

Furthermore, according to the special car operation system 1 of the first embodiment, in the configuration described, the passenger prediction unit 10 predicts, on the basis of a plurality of predetermined passenger types, passenger types of respective passengers who get on the train scheduled to operate and predicts the number of passengers of each of the passenger types predicted, thereby outputting passenger count information indicating the number of passengers of each of the passenger types predicted The car-count determination unit 20 determines, as to a plurality of predetermined types of special cars, the number of special cars for each of the types of special cars corresponding to the respective passenger types on the basis of the passenger count information output by the passenger prediction unit 10, and outputs car count information indicating the number of special cars determined for each of the types.

With the configuration, the special car operation system 1 can reduce the congestion of general cars while meeting the needs of passengers who want to get on the special car, in a predetermined train operation plan.

Moreover, in addition to the configuration described, the special car operation system 1 according to the first embodiment includes: the arrangement-position determination unit 21 that determines the position where the special car is to be disposed in the train on the basis of the car count information output by the car-count determination unit 20 and outputs arrangement position information indicating the position determined; the platform-position acquisition unit 40 that estimates the stop position of the special car on the platform when the train arrives at a station where the train is scheduled to arrive on the basis of the arrangement position information output by the arrangement-position determination unit 21 and outputs platform position information indicating the estimated stop position of the special car; and the output generation unit 50 that generates an output signal for guiding a passenger who is going to get on the special car to the stop position of the special car on the platform on the basis of the platform position information output by the platform-position acquisition unit 40, outputs the output signal generated to the output device 51 at a predetermined time point before the train arrives at the station where the train is scheduled to arrive, and causes the output device 51 to provide output based on the output signal.

With the configuration, the special car operation system 1 can reduce the congestion of general cars while meeting the needs of passengers who want to get on the special car, in a predetermined train operation plan. In addition, the special car operation system 1 can notify the passenger who is going to get on the special car of the stop position of the special car on the platform.

Furthermore, in addition to the configuration described, the special car operation system 1 according to the first embodiment includes: the ticket-count determination unit 60 that determines the number of tickets to be issued for getting on the special car on the basis of the car count information output by the car-count determination unit 20 and outputs ticket count information indicating the determined number of tickets to be issued; and the request reception unit 61 that receives a request to reserve or purchase the ticket for getting on the special car on the basis of the ticket count information output by the ticket-count determination unit 60.

With the configuration, the special car operation system 1 can reduce the congestion of general cars while meeting the needs of passengers who want to get on the special car, in a predetermined train operation plan. Moreover, the special car operation system 1 can receive an adequate number of requests to reserve or purchase the ticket for getting on the special car.

Furthermore, in addition to the configuration described, the special car operation system 1 according to the first embodiment includes: the arrangement-position determination unit 21 that determines the position where the special car is to be disposed in the train on the basis of the car count information output by the car-count determination unit 20 and outputs arrangement position information indicating the position determined; the platform-position acquisition unit 40 that estimates the stop position of the special car on the platform when the train arrives at the station where the train is scheduled to arrive on the basis of the arrangement position information output by the arrangement-position determination unit 21 and outputs platform position information indicating the estimated stop position of the special car; and the guidance transmission unit 62 that generates guidance information for guiding a passenger who has reserved or purchased the ticket for getting on the special car to the stop position of the special car on the platform on the basis of the platform position information output by the platform-position acquisition unit 40 and transmits the guidance information generated to the mobile terminal 63 carried by the passenger.

With the configuration, the special car operation system 1 can reduce the congestion of general cars while meeting the needs of passengers who want to get on the special car, in a predetermined train operation plan. In addition, the special car operation system 1 can notify the passenger who is going to get on the special car of the stop position of the special car on the platform.

Note that, in the above description, the special car has been described as a car that a passenger such as a business traveler or a vacationer gets on, but the special car is not limited to a car that a passenger gets on.

For example, the special car may be an unmanned train car in which work including disinfection work using ultraviolet rays, alcohol, hypochlorous acid, or the like, or maintenance work such as inspection or repair of interior devices is performed. Normally, while a train is in operation, work such as disinfection work or maintenance work cannot be performed in a car with passengers, but by setting some cars in the train in operation as unmanned train cars, it is possible to perform work such as disinfection work or maintenance work even on the train in operation. In this case, for example, the car-specification control unit 31 outputs a control signal for performance of work such as disinfection work or maintenance work to equipment for which the work is to be performed. Furthermore, in this case, the car-specification control unit 31 may output a control signal for preventing the entry and exit door of the special car, which is an unmanned train car, from being opened and closed when the train arrives at the platform.

In addition, for example, the special car may be a cargo car loaded with only luggage. The car-specification control unit 31 outputs a control signal for changing a general car to a cargo car that is a special car.

Specifically, for example, the car-specification control unit 31 outputs a control signal for changing the arrangement of the seats from the long seat to the cross seat or the box seat, and further for flipping up the seats to create a space for housing luggage.

The work of loading luggage from the platform onto the special car, which is a cargo car, or the work of unloading luggage from the special car, which is a cargo car, onto the platform may be performed by a self-propelled robot, may be performed by a passenger who is the owner of the luggage, or may be performed by station staff or an attendant of the special car, which is a cargo car.

In a case where the special car is a cargo car, the ticket-count determination unit 60 determines the number of luggage tickets to be issued for placing luggage on the special car, which is a cargo car, and outputs ticket count information indicating the number of tickets to be issued. In addition, the request reception unit 61 receives a request to reserve or purchase a luggage ticket for placing luggage on the special car, which is a cargo car, on the basis of the ticket count information output by the ticket-count determination unit 60.

Note that, in the above description, the passengers of the special car have been described as business travelers or vacationers, but the passengers of the special car are not limited to business travelers or vacationers.

For example, the passengers of the special car may include a physically weak person such as a pregnant woman, an elderly person, a physically handicapped person, or a person with an underlying condition defined in advance such as cancer or diabetes (hereinafter referred to as "specific disease carrier"). In a case where the passengers of the special car include a physically weak person, by getting on the special car, the physically weak person can avoid passenger congestion and thus it is possible to reduce the risk of droplet infection to the physically weak person due to bacteria or viruses, as compared with a case where the physically weak person gets on a general car.

Note that it is possible to modify or omit any component of the embodiment within the scope of the present disclosure.

### INDUSTRIAL APPLICABILITY

The special car operation system of the present disclosure can be applied to train operation in accordance with a predetermined operation plan.

### REFERENCE SIGNS LIST

1: special car operation system, 10: passenger prediction unit, 20: car-count determination unit, 21: arrangement-position determination unit, 30: car-specification change instructing unit, 31: car-specification control unit, 40: platform-position acquisition unit, 50: output generation unit, 51: output device, 60: ticket-count determination unit, 61: request reception unit, 62: guidance transmission unit, 63: mobile terminal, 70: network

## Claims

1. A special car operation system (1) comprising:
a passenger prediction unit (10) to predict the number of passengers on a train scheduled to operate and output passenger count information indicating the number of passengers predicted; and
a car-count determination unit (20) to determine the number of special cars in the train on a basis of the passenger count information output by the passenger prediction unit and output car count information indicating the number of special cars determined;
an arrangement-position determination unit (21) to determine a position where a special car is to be disposed in the train on a basis of the car count information output by the car-count determination unit and output arrangement position information indicating the position determined;
a platform-position acquisition unit (40) to estimate a stop position of the special car on a platform when the train arrives at a station where the train is scheduled to arrive on a basis of the arrangement position information output by the arrangement-position determination unit and output platform position information indicating the stop position of the special car estimated; and
an output generation unit (50) to generate an output signal for guiding a passenger who is going to get on the special car to the stop position of the special car on the platform on a basis of the platform position information output by the platform-position acquisition unit, output the output signal generated to an output device (51) at a predetermined time point before the train arrives at the station where the train is scheduled to arrive, and cause the output device to provide output based on the output signal,
wherein
the special car is a car with a special specification which is different from a specification of a general car and which serves for a specific passenger type,
the passenger prediction unit predicts, on a basis of a plurality of predetermined passenger types, passenger types of respective passengers who get on the train scheduled to operate and predicts the number of passengers of each of the passenger types predicted, thereby outputting the passenger count information indicating the number of passengers of each of the passenger types predicted, and
the car-count determination unit determines, as to a plurality of predetermined types of special cars, the number of special cars for each of the types of special cars corresponding to the respective passenger types on a basis of the passenger count information output by the passenger prediction unit, and outputs the car count information indicating the number of special cars determined for each of the types.

2. The special car operation system according to claim 1 further comprising:
a car-specification change instructing unit (30) to generate car-specification change instructing information for changing a specification of a car disposed at the position indicated by the arrangement position information to a predetermined specification on a basis of the arrangement position information output by the arrangement-position determination unit and output the car-specification change instructing information generated.

3. The special car operation system according to claim 2 wherein the specification of a car disposed at the position indicated by the arrangement position information is a specification of at least one of a seat, a lighting device, and an acoustic device, the seat, the lighting device, and the acoustic device being included in accompanying equipment provided in the car disposed at the position indicated by the arrangement position information.

4. The special car operation system according to claim 1 further comprising:
a ticket-count determination unit (60) to determine the number of tickets to be issued for getting on a special car on a basis of the car count information output by the car-count determination unit and output ticket count information indicating the number of tickets to be issued determined; and
a request reception unit (61) to receive a request to reserve or purchase a ticket for getting on the special car on a basis of the ticket count information output by the ticket-count determination unit.

5. The special car operation system according to claim 4 further comprising:
and
a guidance transmission unit (62) to generate guidance information for guiding a passenger who has reserved or purchased the ticket for getting on the special car to the stop position of the special car on the platform on a basis of the platform position information output by the platform-position acquisition unit and transmit the guidance information generated to a mobile terminal (63) carried by the passenger.

6. A special car operation method comprising:
a passenger prediction step of, by a passenger prediction unit (10), predicting the number of passengers on a train scheduled to operate and outputting passenger count information indicating the number of passengers predicted;
a car-count determination step of, by a car-count determination unit (20), determining the number of special cars in the train on a basis of the passenger count information output by the passenger prediction step and outputting car count information indicating the number of special cars determined;
an arrangement-position determination step of, by an arrangement-position determination unit (21), determining a position where a special car is to be disposed in the train on a basis of the car count information output by the car-count determination unit and outputting arrangement position information indicating the position determined;
a platform-position acquisitioning step of, by a platform-position acquisition unit (40), estimating a stop position of the special car on a platform when the train arrives at a station where the train is scheduled to arrive on a basis of the arrangement position information output by the arrangement-position determination unit and outputting platform position information indicating the stop position of the special car estimated; and
an output generating step of, by an output generation unit (50), generating an output signal for guiding a passenger who is going to get on the special car to the stop position of the special car on the platform on a basis of the platform position information output by the platform-position acquisition unit, outputting the output signal generated to an output device (51) at a predetermined time point before the train arrives at the station where the train is scheduled to arrive, and causing the output device to provide output based on the output signal, wherein
the special car is a car with a special specification which is different from a specification of a general car and which serves for a specific passenger type, a
the passenger prediction unit predicts, on a basis of a plurality of predetermined passenger types, passenger types of respective passengers who get on the train scheduled to operate and predicts the number of passengers of each of the passenger types predicted, thereby outputting the passenger count information indicating the number of passengers of each of the passenger types predicted, and
the car-count determination unit determines, as to a plurality of predetermined types of special cars, the number of special cars for each of the types of special cars corresponding to the respective passenger types on a basis of the passenger count information output by the passenger prediction step, and outputs the car count information indicating the number of special cars determined for each of the types.

## Patentansprüche

1. Sonderwagen-Betriebssystem (1), umfassend:
eine Passagier-Vorhersageeinheit (10), um die Anzahl von Passagieren in einem Zug, der planmäßig verkehren soll, vorherzusagen, und Passagierzählungsinformationen, welche eine vorhergesagte Anzahl von Passagieren angeben, auszugeben; und
eine Wagenzählung-Bestimmungseinheit (20), um die Anzahl von Sonderwägen im Zug auf der Grundlage der von der Passagier-Vorhersageeinheit ausgegebenen Passagierzählungsinformationen zu bestimmen und Wagenzählungsinformationen, welche die Anzahl der bestimmten Sonderwägen angeben, auszugeben;
eine Anordnungsposition-Bestimmungseinheit (21), um eine Position, an der ein Sonderwagen in dem Zug auf der Grundlage der von der Wagenzählung-Bestimmungseinheit ausgegebenen Wagenzählungsinformationen angeordnet werden soll, zu bestimmen, und Anordnungspositionsinformationen, welche die bestimmte Position angeben, zu bestimmen;
eine Bahnsteigposition-Erwerbungseinheit (40), um eine Halteposition des Sonderwagens an einem Bahnsteig, wenn der Zug an einer Station ankommt, an welcher der Zug planmäßig ankommen soll, auf der Grundlage der von der Anordnungsposition-Bestimmungseinheit ausgegebenen Anordnungspositionsinformationen zu schätzen, und Bahnsteigpositionsinformationen, welche die geschätzte Halteposition des Sonderwagens angeben, auszugeben; und
eine Ausgabe-Erzeugungseinheit (50), um ein Ausgabesignal zum Leiten eines Passagiers, der in den Sonderwagen einsteigen will, zur Halteposition des Sonderwagens auf dem Bahnsteig, auf der Grundlage der Bahnsteigpositionsinformationen, die von der Bahnsteigposition-Erwerbungseinheit ausgegeben werden, zu generieren, das erzeugte Ausgabesignal an eine Ausgabeeinrichtung (51) zu einem vorbestimmten Zeitpunkt auszugeben, bevor der Zug an der Station ankommt, an welcher der Zug planmäßig ankommen soll, und die Ausgabeeinrichtung zu veranlassen, eine Ausgabe auf der Grundlage des Ausgabesignals bereitzustellen, wobei
der Sonderwagen ein Wagen mit einer Sonderspezifikation ist, die sich von einer Spezifikation eines allgemeinen Wagens unterscheidet und für einen bestimmten Passagiertyp dient,
die Passagier-Vorhersageeinheit, auf der Grundlage einer Vielzahl vorbestimmter Passagiertypen, Passagiertypen von jeweiligen Passagieren, die in den Zug, der planmäßig verkehren soll, einsteigen, vorhersagt, und die Anzahl von Passagieren jedes der vorhergesagten Passagiertypen vorhersagt, wodurch die Passagierzählungsinformationen ausgegeben werden, welche die Anzahl von Passagieren jedes der vorhergesagten Passagiertypen angeben, und
die Wagenzählung-Bestimmungseinheit, für eine Vielzahl vorbestimmter Typen von Sonderwägen, die Anzahl von Sonderwägen für jeden der Typen von Sonderwägen entsprechend den jeweiligen Passagiertypen auf der Grundlage der von der Passagier-Vorhersageeinheit ausgegebenen Passagierzählungsinformationen bestimmt, und die Wagenzählungsinformationen ausgibt, welche die für jeden der Typen bestimmte Anzahl von Sonderwägen angeben.

2. Sonderwagen-Betriebssystem nach Anspruch 1, weiter umfassend: eine Wagenspezifikation-Änderungs-Anweisungseinheit (30), um Wagenspezifikation-Änderungs-Anweisungsinformationen zum Ändern einer Spezifikation eines Wagens, welcher an der durch die Anordnungspositionsinformationen angegebenen Position angeordnet ist, auf eine vorbestimmte Spezifikation auf der Grundlage der von der Anordnungsposition-Bestimmungseinheit ausgegebenen Anordnungspositionsinformationen zu erzeugen, und die erzeugten Wagenspezifikation-Änderungs-Anweisungsinformationen auszugeben.

3. Sonderwagen-Betriebssystem nach Anspruch 2, wobei die Spezifikation eines Wagens, der sich an der durch die Anordnungspositionsinformation angegebenen Position befindet, eine Spezifikation von mindestens einem von einem Sitz, einer Beleuchtungseinrichtung und einer akustischen Einrichtung ist, wobei der Sitz, die Beleuchtungseinrichtung und die akustische Einrichtung in der Zubehöraustattung enthalten sind, die in dem Wagen vorgesehen ist, der sich an der durch die Anordnungspositionsinformationen angegebenen Position befindet.

4. Sonderwagen-Betriebssystem nach Anspruch 1, weiter umfassend:
eine Fahrscheinzählung-Bestimmungseinheit (60), um die Anzahl von Fahrscheinen, die für das Einsteigen in einen Sonderwagen auszugeben sind, auf der Grundlage der von der Fahrscheinzählung-Bestimmungseinheit ausgegebenen Fahrscheinzählungsinformationen zu bestimmen, und Fahrscheinzählungsinformationen, welche die bestimmte Anzahl von auszugebenden Fahrscheinen anzeigen, auszugeben; und
eine Anforderung-Empfangseinheit (61), um eine Anforderung zum Reservieren oder Erwerben eines Fahrscheins zum Einsteigen in den Sonderwagen auf der Grundlage der von der Fahrscheinzählung-Bestimmungseinheit ausgegebenen Fahrscheinzählungsinformationen zu empfangen.

5. Sonderwagen-Betriebssystem nach Anspruch 4, weiter umfassend:
und
eine Führung-Übermittlungseinheit (62), um Führungsinformationen zum Führen eines Passagiers, der den Fahrschein zum Einsteigen in den Sonderwagen reserviert oder erworben hat, zur Halteposition des Sonderwagens an dem Bahnsteig auf der Grundlage der von der Bahnsteigposition-Erwerbungseinheit ausgegebenen Bahnsteigpositionsinformationen zu erzeugen, und die erzeugten Führungsinformationen an ein von dem Passagier mitgeführtes mobiles Endgerät (63) zu übermitteln.

6. Sonderwagen-Betriebsverfahren, umfassend:
einen Passagier-Vorhersageschritt des, durch eine Passagier-Vorhersageeinheit (10), Vorhersagens der Anzahl von Passagieren in einem Zug, der planmäßig verkehren soll, und Ausgebens von Passagierzählungsinformationen, welche eine vorhergesagte Anzahl von Passagieren angeben;
einen Wagenzählung-Bestimmungsschritt des, durch eine Wagenzählung-Bestimmungseinheit (20), Bestimmens der Anzahl von Sonderwägen in dem Zug auf der Grundlage der Passagierzählungsinformationen, die durch den Passagier-Vorhersageschritt ausgegeben werden, und Ausgebens von Wagenzählungsinformationen, welche die Anzahl von bestimmten Sonderwägen angeben;
einen Anordnungsposition-Bestimmungsschritt des, durch eine Anordnungsposition-Bestimmungseinheit (21), Bestimmens einer Position, an der ein Sonderwagen in dem Zug angeordnet werden soll, auf der Grundlage der von der Wagenzählung-Bestimmungseinheit ausgegebenen Wagenzählungsinformationen, und Ausgebens der Anordnungspositionsinformationen, welche die bestimmte Position angeben;
einen Bahnsteigposition-Erwerbungsschritt des, durch eine Bahnsteigposition-Erwerbungseinheit (40), Schätzens einer Halteposition des Sonderwagens an einem Bahnsteig, wenn der Zug an einer Station ankommt, an welcher der Zug planmäßig ankommen soll, auf der Grundlage der von der Anordnungsposition-Bestimmungseinheit ausgegebenen Anordnungspositionsinformationen, und Ausgebens von Bahnsteigpositionsinformationen, welche die geschätzte Halteposition des Sonderwagens angeben; und
einen Ausgabe-Erzeugungsschritt des, durch eine Ausgabe-Erzeugungseinheit (50), Erzeugens eines Ausgabesignals zum Führen eines Passagiers, der in den Sonderwagen einsteigen will, zur Halteposition des Sonderwagens an dem Bahnsteig, auf der Grundlage der von der Bahnsteigposition-Erwerbungseinheit ausgegebenen Bahnsteigpositionsinformationen, Ausgebens des erzeugten Ausgabesignals zu einem vorbestimmten Zeitpunkt, bevor der Zug an der Station ankommt, an welcher der Zug planmäßig ankommen soll, an eine Ausgabeeinrichtung (51), und Veranlassens der Ausgabeeinrichtung, eine Ausgabe auf der Grundlage des Ausgabesignals bereitzustellen, wobei
der Sonderwagen ein Wagen mit einer Sonderspezifikation ist, die sich von einer Spezifikation eines allgemeinen Wagens unterscheidet und für einen bestimmten Passagiertyp dient,
die Passagier-Vorhersageeinheit, auf der Grundlage einer Vielzahl vorbestimmter Passagiertypen, Passagiertypen von jeweiligen Passagieren vorhersagt, die in den Zug, der planmäßig verkehren soll, einsteigen, und die Anzahl von Passagieren jedes der vorhergesagten Passagiertypen vorhersagt, wodurch die Passagierzählungsinformationen ausgegeben werden, welche die Anzahl von Passagieren jedes der vorhergesagten Passagiertypen angeben, und
die Wagenzählung-Bestimmungseinheit, für eine Vielzahl vorbestimmter Typen von Sonderwägen, die Anzahl von Sonderwägen für jeden der Typen von Sonderwägen entsprechend den jeweiligen Passagiertypen auf der Grundlage der durch den Passagier-Vorhersageschritt ausgegebenen Passagierzählungsinformationen bestimmt, und die Wagenzählungsinformationen, welche die für jeden der Typen bestimmte Anzahl von Sonderwägen angeben, ausgibt.

## Revendications

1. Système d'exploitation de voiture spéciale (1), comprenant :
une unité de prédiction de passagers (10) pour prédire le nombre de passagers dans un train dont l'exploitation est programmée et délivrer en sortie des informations de comptage de passagers indiquant le nombre de passagers prédit ; et
une unité de détermination de comptage de voitures (20) pour déterminer le nombre de voitures spéciales sur le train sur la base des informations de comptage de passagers délivrées en sortie par l'unité de prédiction de passagers et des informations de comptage de voitures délivrées en sortie indiquant le nombre de voitures spéciales déterminé ;
une unité de détermination de position d'agencement (21) pour déterminer une position dans laquelle une voiture spéciale doit être disposée dans le train sur la base des informations de comptage de voitures délivrées en sortie par l'unité de détermination de comptage de voitures et des informations de position d'agencement délivrées en sortie indiquant la position déterminée ;
une unité d'acquisition de position de plate-forme (40) pour estimer une position d'arrêt de la voiture spéciale sur une plate-forme lorsque le train arrive à une station où le train est programmé pour arriver sur la base des informations de position d'agencement délivrées en sortie par l'unité de détermination de position d'agencement et des informations de position de plate-forme délivrées en sortie indiquant la position d'arrêt de la voiture spéciale estimée ; et
une unité de génération de sortie (50) pour générer un signal de sortie pour guider un passager qui va monter sur la voiture spéciale vers la position d'arrêt de la voiture spéciale sur la plate-forme sur la base des informations de position de plate-forme délivrées en sortie par l'unité d'acquisition de position de plate-forme, délivrer en sortie le signal de sortie généré vers un dispositif de sortie (51) à un moment prédéterminé avant que le train arrive à la station où le train est programmé pour arriver, et amener le dispositif de sortie à fournir une sortie sur la base du signal de sortie, dans lequel
la voiture spéciale est une voiture avec une spécification spéciale qui est différente d'une spécification d'une voiture générale et qui sert à un type de passager spécifique,
l'unité de prédiction de passagers prédit, sur la base d'une pluralité de types de passager prédéterminés, les types de passager de passagers respectifs qui montent dans le train dont l'exploitation est programmée et prédit le nombre de passagers de chacun des types de passager prédits, en fournissant ainsi les informations de comptage de passagers indiquant le nombre de passagers de chacun des types de passager prédits, et
l'unité de détermination de comptage de voitures détermine, par rapport à une pluralité de types de voiture spéciale prédéterminés, le nombre de voitures spéciales pour chacun des type de voiture spéciale correspondant aux type de passager respectifs sur la base des informations de comptage de passagers délivrées en sortie par l'unité de prédiction de passagers, et délivre en sortie les informations de comptage de voitures indiquant le nombre de voitures spéciales déterminé pour chacun des types.

2. Système d'exploitation de voiture spéciale selon la revendication 1, comprenant en outre :
une unité d'instruction de changement de spécification de voiture (30) pour générer des informations d'instruction de changement de spécification de voiture pour changer une spécification d'une voiture disposée à la position indiquée par les informations de position d'agencement en une spécification prédéterminée sur la base des informations de position d'agencement délivrées en sortie par l'unité de détermination de position d'agencement, et délivrer en sortie les informations d'instruction de changement de spécification de voiture générées.

3. Système d'exploitation de voiture spéciale selon la revendication 2, dans lequel la spécification d'une voiture disposée à la position indiquée par les informations de position d'agencement est une spécification d'au moins un parmi un siège, un dispositif d'éclairage et un dispositif acoustique, le siège, le dispositif d'éclairage et le dispositif acoustique étant inclus dans un équipement d'accompagnement fourni dans la voiture disposée à la position indiquée par les informations de position d'agencement.

4. Système d'exploitation de voiture spéciale selon la revendication 1, comprenant en outre :
une unité de détermination de comptage de billets (60) pour déterminer le nombre de billets à émettre pour monter dans une voiture spéciale sur la base des informations de comptage de voitures délivrées en sortie par l'unité de détermination de comptage de voitures et des informations de comptage de billets délivrées en sortie indiquant le nombre de billets à émettre déterminé ; et
une unité de réception de demande (61) pour recevoir une demande de réservation ou d'achat d'un billet pour monter dans la voiture spéciale sur la base des informations de comptage de billets délivrés en sortie par l'unité de détermination de comptage de billets.

5. Système d'exploitation de voiture spéciale selon la revendication 4, comprenant en outre :
et
une unité de transmission de guidage (62) pour générer des informations de guidage afin de guider un passager qui a réservé ou acheté le billet pour monter dans la voiture spéciale jusqu'à la position d'arrêt de la voiture spéciale sur la plate-forme sur la base des informations de position de plate-forme délivrées en sortie par l'unité d'acquisition de position de plate-forme, et transmettre les informations de guidage générées à un terminal mobile (63) porté par le passager.

6. Procédé d'exploitation de voiture spéciale, comprenant :
une étape de prédiction de passagers consistant, par l'intermédiaire d'une unité de prédiction de passagers (10), à prédire le nombre de passagers sur un train dont l'exploitation est programmée et à délivrer en sortie des informations de comptage de passagers indiquant le nombre prédit de passagers ;
une étape de détermination de nombre de voitures consistant, par l'intermédiaire d'une unité de détermination de nombre de voitures (20), à déterminer le nombre de voitures spéciales dans le train sur la base des informations de nombre de passagers fournies par l'étape de prédiction de passagers et à délivrer en sortie des informations de nombre de voitures indiquant le nombre de voitures spéciales déterminé ;
une étape de détermination de position d'agencement consistant, par l'intermédiaire d'une unité de détermination de position d'agencement (21), à déterminer une position où une voiture spéciale doit être disposée dans le train sur la base des informations de comptage de voitures délivrées en sortie par l'unité de détermination de comptage de voitures, et à délivrer en sortie des informations de position d'agencement indiquant la position déterminée ;
une étape d'acquisition de position de plate-forme consistant, par l'intermédiaire d'une unité d'acquisition de position de plate-forme (40), à estimer une position d'arrêt de la voiture spéciale sur une plate-forme lorsque le train arrive à une station où le train est programmé pour arriver sur la base des informations de position d'agencement délivrées en sortie par l'unité de détermination de position d'agencement, et à délivrer en sortie des informations de position de plate-forme indiquant la position d'arrêt de la voiture spéciale estimée ; et
une étape de génération de sortie consistant, par l'intermédiaire d'une unité de génération de sortie (50), à générer un signal délivré en sortie pour guider un passager qui va monter sur la voiture spéciale vers la position d'arrêt de la voiture spéciale sur la plate-forme sur la base des informations de position de plate-forme délivrées en sortie par l'unité d'acquisition de position de plate-forme, à délivrer en sortie le signal de sortie généré vers un dispositif de sortie (51) à un moment prédéterminé avant que le train n'arrive à la station où le train est programmé pour arriver, et à amener le dispositif de sortie à fournir une sortie sur la base du signal de sortie, dans lequel
la voiture spéciale est une voiture avec une spécification spéciale qui est différente d'une spécification d'une voiture générale et qui sert à un type de passager spécifique,
l'unité de prédiction de passagers prédit, sur la base d'une pluralité de types de passager prédéterminés, les types de passager de passagers respectifs qui montent dans le train dont l'exploitation est programmée et prédit le nombre de passagers de chacun des types de passager prédits, en fournissant ainsi les informations de comptage de passagers indiquant le nombre de passagers de chacun des types de passager prédits, et
l'unité de détermination de comptage de voitures détermine, par rapport à une pluralité de types prédéterminés de voitures spéciales, le nombre de voitures spéciales pour chacun des type de voiture spéciale correspondant aux type de passager respectifs sur la base des informations de comptage de passagers délivrées en sortie par l'étape de prédiction de passagers, et délivre en sortie les informations de comptage de voitures indiquant le nombre de voitures spéciales déterminé pour chacun des types.
